# EUROPEAN PATENT SPECIFICATION

(11) **EP 0 629 098 B1**
(45) Date of publication and mention of the grant of the patent: **12.12.2001**
(21) Application number: 94107629.1
(22) Date of filing: 17.05.1994
(51) Int. Cl.: H04Q 9/00, G08C 17/00, G08C 17/02

(54) **Domestic meter and utility supply system**
Haushaltszähler und Versorgungseinrichtung
Compteur domestique et système d'alimentation

(30) Priority: 17.05.1993 GB 9310111
(43) Date of publication of application: 14.12.1994
(73) Proprietor: LOGICA UK LIMITED, London NW1 2PL (GB)
(72) Inventor: Bishop, Dr. Philip John, c/o Logica U.K. Limited, London W1A 4SE (GB)
(74) Representative: Avery, Stephen John

(56) References cited:
- WO-A-93/02515
- WO-A-93/04451
- US-A- 4 230 989

## Description

The present invention relates to a communication system comprising a chain of meters, and a meter for use in such a system.

Reading of utility meters provided in domestic and industrial premises has traditionally been undertaken manually. In the electricity and gas industry, readings are taken once per quarter, though in an effort to reduce the manpower required, there is currently a move towards customer-read, or estimated readings, with readings by the utility taking place only once per year.

Automated meter reading would reduce the manpower cost, but could involve a large capital outlay, both in the provision of new meters, and in the communication links required. Particularly in the case of domestic metering, the outlay could be large relative to the amounts billed from each customer.

In considering the communication costs, to avoid expensive cabling schemes, it is known to use radio communications. However, there are a number of disadvantages with radio communications, including the limited range which is possible using the available bands, the cost of the large number of repeater stations that would be required, and the lack of reliability of communication at extreme range due to interference from other radios, due to the weather, and due to the local topography.

WO 93/02515 describes a wide area communications network communicating data from a plurality of network service modules through a plurality of remote cell nodes and intermediate data terminals to a central data terminal. The wide area communications network collects network generated by a plurality of physical devices such as gas, water or electricity meters, located within a geographical area. The wide area communications network is a layered network having a hierarchical communications topology. The central data terminal controls network operation. Intelligence exists at all layers of the network, thereby easing the workload of the central data terminal. The intelligence attributed to each module is a function of the application of that module.

US-A-4 230 981 describes a radio communication system including a polling central station and a number of remote stations. Each remote station is identified by a unique address transmitted from the central station preceding a message intended for such remote station. Each of the remote stations also may be programmed to respond to the address of a "partner" station in addition to responding to its own address. The "partner" station address is employed whenever one of the remote stations is located such that a transmission link problem exists between such station and the central station polling station. When this condition exists, the station which has difficulty communicating directly with the central station is provided with a new address and no longer is responsive to the address of messages transmitted to it from the central station. Another remote station, having a better communications link between it and the central station, then is optionally programmed to respond to the address of its "partner" station and translates that address to the new address, which precedes the relaying or retransmission of the message to the partner station. Similarly, messages from the partner station are transmitted to the relaying station, preceded by the new address and the relaying station translates the new address to the original or normal address of the partner-station for retransmission to the central polling station. Thus, different ones of the remote stations optionally may be used as relaying stations as needed in the implementation of the system, without requiring any changes whatsoever in the operation of the central polling station.

The present invention seeks to provide a remedy.

According to a first aspect of the invention, there is provided a meter for liquid or gas metering for use in a communication system, said communication system comprising a chain of such meters and being for remote reading of a gas or liquid utility supplied, produced or used at a given location, said meter comprising a measurement means, for the utility supplied, produced or used; a radio receiver, a radio transmitter, for transmitting measurement information generated by the measurement means, and arranged to operate with the radio receiver to pass on information received by the receiver; characterized by pressure control means for allowing the gas or liquid to be supplied at a reduced pressure, according to commands received by the receiver.

Advantageously, there is provided a communication system comprising a chain of such meters, each meter being adapted to communicate with others in the chain to pass information along the chain.

Advantageously, there is provided a hub connecting a plurality of chains of meters in a star formation or a loop formation.

Advantageously, there is provided a data gatherer, connecting a plurality of said hubs in a star formation or a loop formation.

Advantageously, two or more communication paths are defined along one chain or part of a chain, each path being created by bypassing the meters used by the other path or paths.

Advantageously, said multiple communication paths are provided in the vicinity of junctions between chains, or in the vicinity of a hub.

Advantageously, each meter determines part of the route of the communication path, by bypassing neighbouring meters.

Advantageously, the hub determines part of the route of the communication path.

Advantageously, the system comprises: a plurality of hubs, each connected to a plurality of meters, wherein upon failure of a hub, neighbouring hubs are reconfigured to communicate with meters normally adapted to communicate with the failed hub.

Advantageously, each hub contains a map of meters normally communicating with it, and a map of meters normally adapted to communicate with neighbouring hubs.

Advantageously, the hubs are adapted to communicate with a network management system, for instructing the neighbouring hubs to reconfigure, in response to an indication that the failed hub has failed.

Advantageously, the meter is arranged to receive and store measurement information from a neighbouring meter and pass this information on when failure of the neighbouring meter is detected.

Advantageously, the meter comprises: means for storing and updating a tariff of charges, and processing means for calculating a total charge from a plurality of readings charged at different rates.

Advantageously, the meter is for remote reading of gas or liquid utilities in domestic premises, and comprises: means for monitoring the gas or liquid pressure, means for storing a reference pressure level, and means for indicating when the monitored pressure is over or under the reference level.

In a second aspect, the present invention provides a utility supply system comprising a plurality of meters for use in a communication system, said communication system comprising a chain of such meters and being for remote reading of a utility supplied, produced or used at a given location, said meters comprising a measurement means, for the utility supplied, produced or used; means for monitoring a parameter of quality of the utility supplied; a radio receiver; and a radio transmitter, for transmitting measurement information generated by the measurement means, and arranged to operate with the radio receiver to pass on information received by the receiver; said meters being for use in domestic premises wherein the supply system has means for controlling the supply of the utility from a central source to the domestic premises in response to quality information transmitted by the meters.

Advantageously, the utility is a gas, a liquid or electricity.

For a better understanding of the invention, and how the same may be put into effect, reference will now be made by way of example to the following drawings, in which:
Figure 1 shows a schematic view of a low power radio domestic metering arrangement according to the present invention, showing the different layers of communication;
Figure 2 shows another schematic view of a low power radio domestic metering arrangement according to the present invention;
Figure 3 shows another schematic view of a low power radio domestic metering arrangement according to the present invention;
Figure 4 shows a schematic view of a low power radio domestic metering arrangement according to the present invention, and showing three alternative communication methods between hubs and domestic meters;
Figure 5 shows a plan view of a typical housing area showing the location of domestic meters along streets, in three separate cells, each having a hub;
Figure 6 shows a schematic view of a plurality of hubs arranged in a cell structure;
Figure 7 is another schematic view of the arrangement of cells of Figure 6 showing how neighbouring cells expand to collect meter readings from a failed cell;
Figure 8 shows the communication path from a single meter to neighbouring meters in the same street;
Figure 9 shows the outward journey of a message from a hub to a remote meter minimising the number of hops;
Figure 10 shows a typical return communication path hopping via every meter, collecting meter readings;
Figure 11 shows a map of meters and routes along streets for a single hub; and
Figure 12 shows a meter in diagrammatic form.

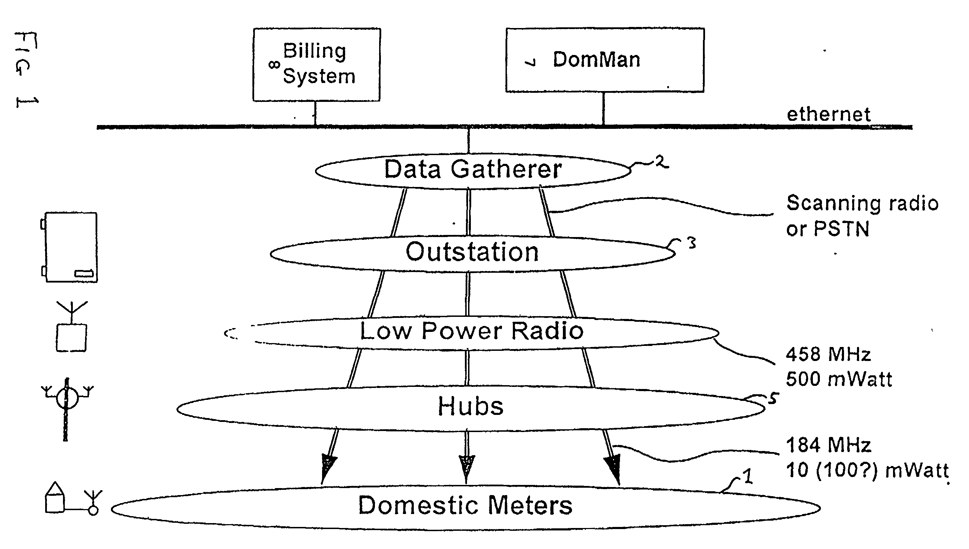

Figure 1 shows the application of this invention to automated reading of domestic water supply meters. Communication is required from each premises, or house, 1 in which the water is consumed, to a data gatherer station 2 where meter reading information is collected for storage in a network management system (DomMan). The management system has overall control of the network and the configuration of the network. The data gatherer 2 temporarily stores meter reading information before it is read out by the management system 7. From there it can be sent to a billing computer 8. The figure illustrates the connection to the billing system computer, via a LAN, e.g. an ethernet link, and to a network management system (DomMan). Communication with meters may be carried out via outstations 3 which may conveniently be sited at sewage pumping stations, since these are already owned by the utilities, and have suitable power supply facilities. In some cases these sites already have communication links with the data gatherer station 2. Typically, a plurality of outstations are provided, each connected to the data gatherer by scanning radio, or by PSTN (public switched telephone network) or a combination of these or other methods.

Typically, communication between outstations and domestic meters takes place via intelligent hubs 5. The data gatherer 2 manages the communications between the network manager and these hubs. These hubs may store a map of the meters they serve. Low power radio using the 458 MHz band may be used to link the hubs to the outstations. Alternatively, where appropriate, a hub may be located at an outstation and physically wired to it. Communication could be made directly between hubs and the data gatherer by radio or PSTN. Lower power 184 MHz radio may be used between meters and hubs, and to communicate between meters. Other bands may be used depending on allocation by the regulatory authorities.

The range of transmission from radio transmitters in each meter, or each location, is relatively small for a variety of reasons. Accordingly, the invention involves using a transmission "hopping" scheme, in which each meter passes on messages and data from other meters. In urban areas, houses are typically spaced apart by approximately 12 metres, and therefore a chain of communication can be established down a single street, optionally following the route of a particular water main 4. A hub can be connected directly to one or more chains of meters and thus hundreds of meters can be connected to a hub, and many hubs connected to each outstation, with a minimum of capital expenditure on dedicated infrastructure.

There would be one hub to one cell, with the cell being defined as including all the meters that are serviced by the hub within that cell. It is envisaged that the hubs would be sited at convenient locations within each cell such as to provide communications with the neighbouring meters and with the data gatherer.

The placement of hubs would be determined by (a) a desire to have the minimum necessary quantity of hubs, and (b) the desire to optimise the communications efficiency to meters at the furthest extremities of the cell, thereby minimising the use of battery power within any of the meters within the cell. As a result it is envisaged that determination of location of the hubs would be a process that would comprise modelling of communications within the meter network prior to siting and installation of the hubs.

Once the meter communications network is operational it is envisaged that the network management system would ensure that the network is optimised to minimise excessive use of meters' batteries through inefficient communications routes.

The network management system would thus extract the meter network map from each of the hubs, would create a complete map of the whole area covered by all the cells, and would optimise the coverage of each primary cell to ensure that individual meters were not subject to excessive communications loading. The optimised primary cell size for each of the hubs would then be sent by the network management system to the individual hubs (probably in the form of a list of meters).

The length of chains of meters will be limited by the amount of data which needs to be transmitted by the meters closest to the hub. Also, the chain may reach an impasse if the gap between properties is greater than a given distance, typically, approximately 50 metres, depending on the circumstances. If necessary, the aerial can be sited above ground to achieve a greater range. Nevertheless, where the spacing between houses is small e.g. less than 50 metres, then leap-frogging along the chain is possible, with every second or third meter being used for a particular transmission. If arranged so that re-transmission by a number of different routes is possible, then there is considerable built in resilience in the case of a single meter failure, for example due to malfunction, or due to a car being parked over the site of the aerial.

Alternatively, there could be two or three simultaneous data transmissions down the chain, each interleaving with the others by using only every second or third meter respectively. This means the network is extremely flexible, so that it can accommodate higher data rates where required, or can be rearranged for lower overall data rate, but higher reliability.

Optionally, instead of communication via hubs, meter chains can communicate with outstations directly, or via the PSTN, or using combinations of these three possibilities. Hubs are preferred, in order to enable shorter chains, or to reduce the number of outstations required. Data may need to be passed via many hubs to reach the nearest outstation. Depending on aerial position and other factors, the spacing of the hubs could be typically 500 metres depending on the circumstances. In practice, in urban areas at least, hubs can conveniently be attached to street lamps, to achieve a good height above the ground, for increased range. This might also enable use of the street lamp power supply. If mounted on a separate post, a battery could be used as the power supply. In this case, the network, and communication protocols should be arranged to minimise power consumption.

The combination of meter chains and hubs has a number of advantages. Hubs can be used to overcome breaks in the chains of meters. The data rate loading can be considerably reduced on the meters nearest to the hub. Also, if the chains of meters are shorter, meter reading over a given area can potentially be speeded up. Also routes for data can be used, to build in redundancy, and therefore reliability, by connecting chains to more than one hub, or by connecting chains in loops so that both ends communicate with a hub.

Communication can be in two directions, either into the data gatherer from each meter, for meter reading, and monitoring purposes, or in the opposite direction, out to each meter, for control purposes. The purposes and advantages of this two-way communication will be explained in more detail later, when an individual meter will be described.

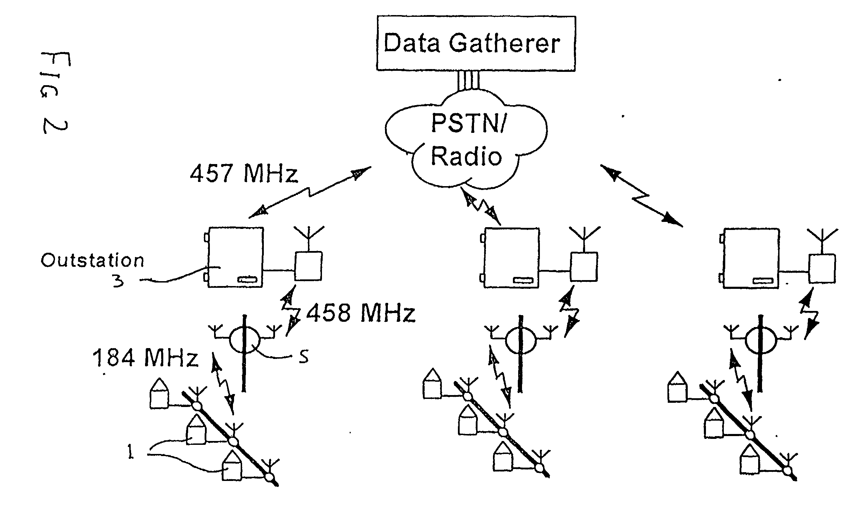

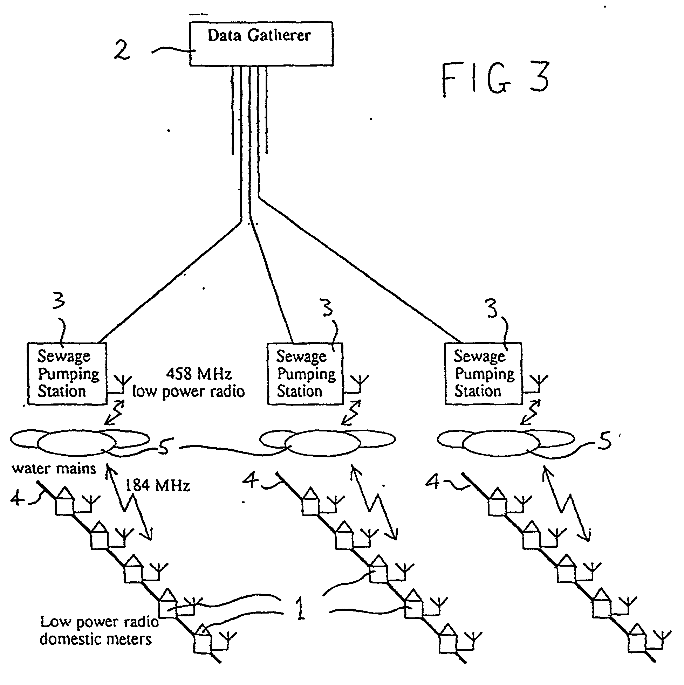

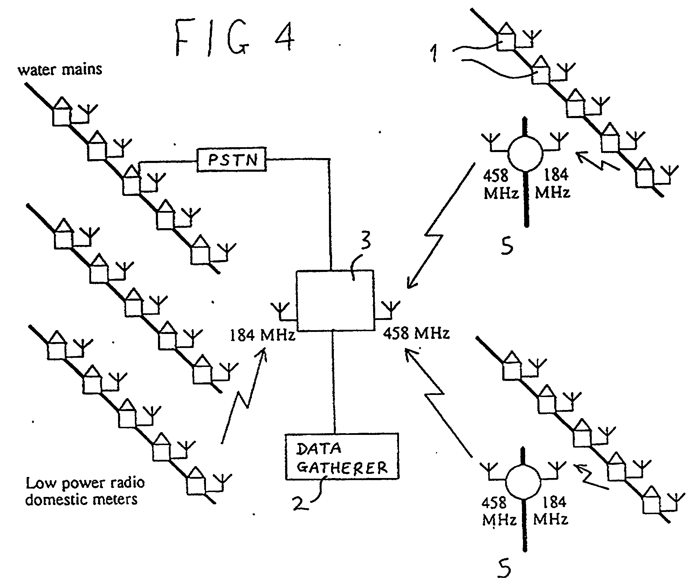

Considering now Figure 2, chains of meters 1 are shown communicating with outstations 3, via hubs 5. The outstations are then linked back to the data gatherer via a 457 MHz radio link, or the PSTN, or a combination of these. Figure 3 shows an arrangement in which sewage pumping stations are used as the locations for the outstations 3 in the system. Further options are shown in Figure 4. Meter chains can communicate with an outstation via the public service telephone network (PSTN). Either a dedicated telephone link could be used, with a radio transmitter and receiver within approximately 50 metres of one of the meters, or the domestic telephone line belonging to one of the water consumers could be used. Alternatively, a dedicated mobile telephone could be used.

Figure 4 also shows chains of meters communicating directly with the outstation 3. The third possibility, of chains communicating with the outstation 3 via a hub 5 is also shown.

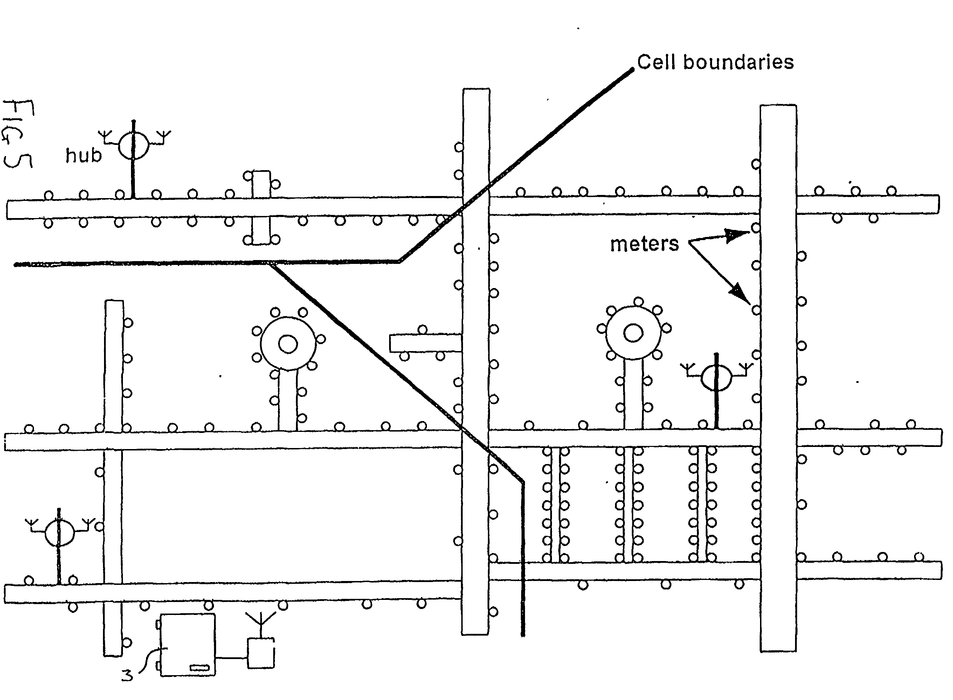

Figure 5 shows a plan view of streets in a typical housing area, with the location of domestic meters along the sides of the streets indicated by small circles. The area is divided into three cells, each cell having a hub. A single outstation 3 services all three hubs.

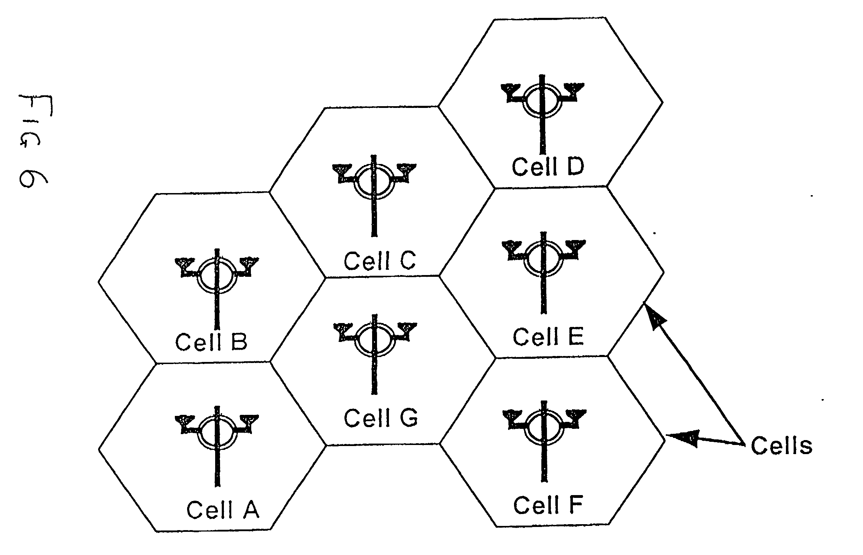

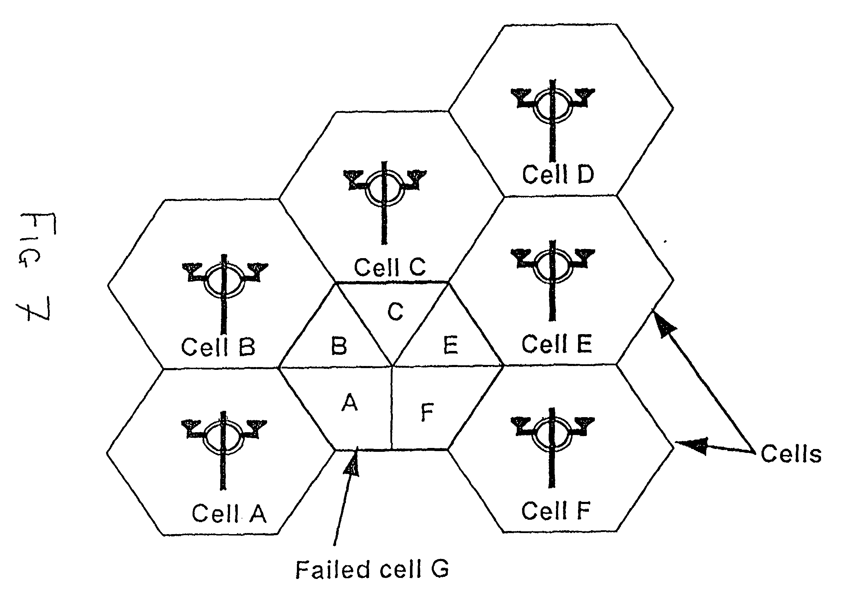

A typical cell structure is shown in Figure 6, the spacing between each hub being in practice approximately 500 metres, depending on the circumstances. In the event of failure of a cell, neighbouring cells can be reconfigured to collect meter readings from the meters in the failed cell. Figure 7 shows such a situation, when cell G has failed. To enable this, each hub or outstation must be sufficiently intelligent to carry and use a map of meters in its own cell, and meters in adjacent cells.

To ensure that all meters can still be read in the event of failure of one of the hubs, the data gatherer would also identify for each cell, additional secondary areas within each of the neighbouring cells. Thus for a hexagonal cell structure (for example), a single hub would have a primary cell coverage, plus 6 additional secondary areas, with each additional secondary area representing 1/6th of the area of each neighbouring cell. When a hub failed, the hubs in the neighbouring 6 cells could thus be instructed to expand their cell area to include the appropriate secondary area.

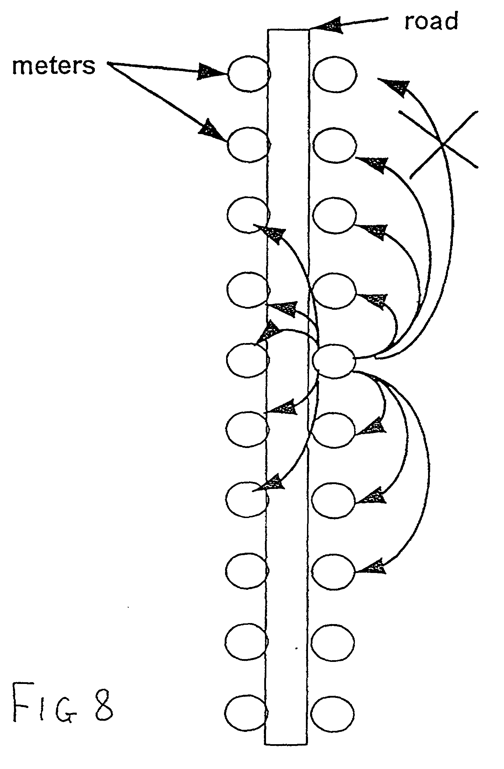

In any one chain of meters in a cell, it is useful if each meter can communicate not only with its nearest neighbour, but also with other slightly more distant meters. Figure 8 shows a number of meters located on either side of a road, and shows communication paths from one meter to ten neighbouring meters. Each meter may have a range of perhaps 50 metres, either above ground, or through the earth or using a combination of these transmission paths. If there are a number of different paths along the chain, then faulty meters may be bypassed, and the maximum data transfer rates for meters closest to hubs can be reduced. This in turn enables longer chains to be constructed, or enables battery life in each meter to be maximised. The battery for each meter may be the most expensive single component in each meter, so it may be of paramount importance to reduce the amount of data transmitted by the busiest meters, those closest to each hub. To facilitate this, each meter should be sufficiently intelligent to carry and use a map of the neighbouring meters within its radio range.

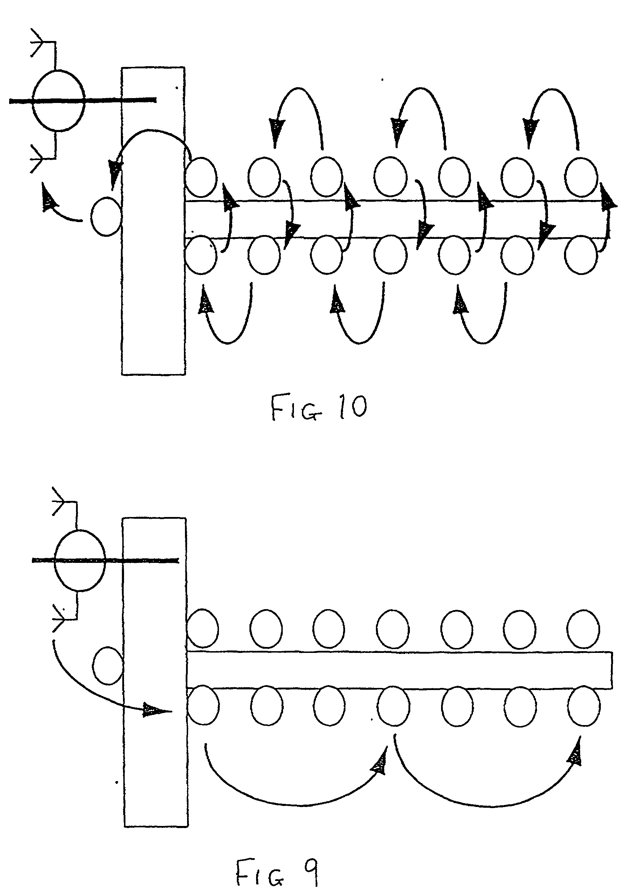

A typical meter reading operation is shown in Figures 9 and 10. A message is sent out along a chain by a hub as shown in Figure 9. On this outward journey, the number of hops is minimised. Figure 10 shows a typical return journey for the message, collecting meter readings from every meter in the chains.

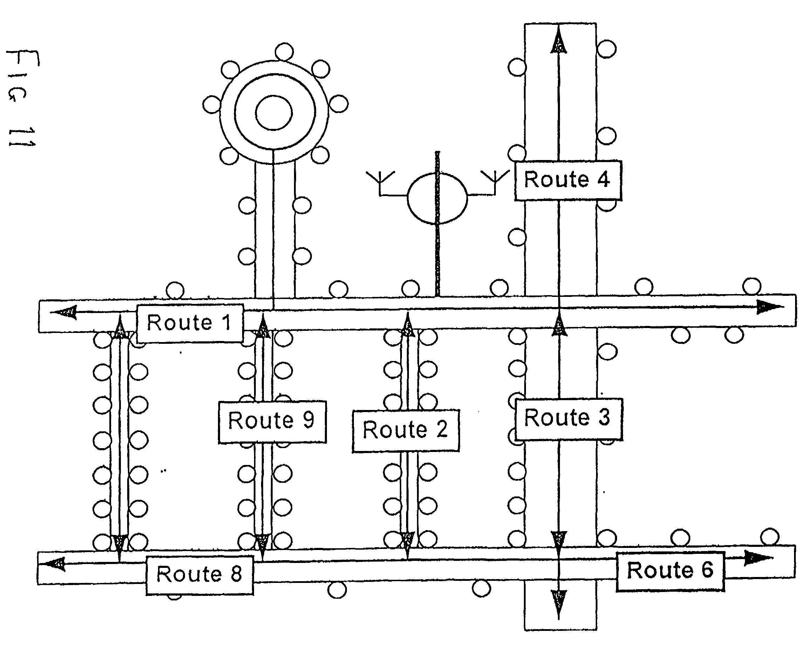

In practice, chains will not be in straightforward single lines as shown in Figures 9 and 10. Figure 11 shows a more realistic topography, in which chains are connected in a more complex matrix fashion. This enables multiple routes to be chosen from any meter to the hub. Meters near junctions could have enough intelligence to decide how to route data in an optimum way, or the intelligent hub could decide the route, and code it in the message, to be read and interpreted by each meter.

Figure 13 shows a diagrammatic representation of a typical meter. Measurement means include a measurement sensor 30, and a radio receiver 31 and radio transmitter 32 are also provided. The radio transmitter can output measurements from the sensor, optionally via a processor 33. Also, it can operate with the radio receiver 31 as a repeater, or as a store and forward device to transmit information from other meters.

Each meter could record daily or hourly flows, say storing the last years values in a memory 38 for interrogation in the event of customer queries. A first meter could also pass its readings to a neighbouring second meter for storage, in case of failure of the first meter.

Other functions in the meter include a leak detector 34. In the case of water meters, it has been estimated that 30% of unaccounted for water is lost after the boundary stop-cock of the customer. The meter could monitor flow, and record, for example, the minimum flow in a given period. At the minimum, one "night-flow" value could be recorded and brought back to the data gatherer from each meter. A further degree of sophistication might involve reporting weekly or monthly minimum flows. The leak detector could issue an alarm and transmit this back to the data gatherer, if the leakage was too high.

The measurement sensor 30 could be operable not only to measure the amount of the utility, such as water, supplied or used, but could also measure one or more parameters of quality of the utility, such as water pressure or mains voltage. In the case of water or gas supply, this could involve measuring the pressure using a pressure transducer. In exceptional circumstances, the meter could raise and report an alarm signal to the data gatherer.

This would give improved information on the state of the supply network, which could be used to improve the supply system.

Meters could continuously or intermittently monitor the quality sensors. Resultant quality information might be regularly recorded in the meter or only exceptions might be recorded (for example, instances of low water pressure might be recorded). A hub could thus read from the meter (a) the recorded quality information, and/or (b) the exceptions, and/or (c) the current value of the quality sensor. In addition, a meter might generate an unsolicited alarm message to be sent to the hub when one of the quality sensors exceeded an alarm condition (for example, if the water pressure was particularly low or if the flow rate was particularly high for a long period of time).

Additionally, quality information such as pressure or voltage could be fed back via the hub and used as feedback for a controller. For example, if water pressure quality information was returned to a controller and the controller noted that all properties had high pressure, the controller might reduce the water pressure thus reducing the amount of water lost in a zone due to leakage and also reducing the number of burst mains that might occur. Alternatively, if the water pressure was found to be low at a number of houses, the controller might choose to increase the pressure of the water supplied to a zone. Such quality information would also be of benefit to a utility in modelling the operation of the distribution network and the production of management reports detailing the performance of the utility.

Regular automated monitoring of consumption of selected properties could be used over a long period of time to help provide better forecasting of future requirements.

In providing a radio receiver in each meter, for the purpose of acting as a repeater, the meter can also make use of information transmitted from the data gatherer. For example, a flow controller 35 can be provided to reduce water pressure, when prolonged high flows are detected (possibly due to leakage, or due to unauthorised hose pipe usage). Also, pressure could be reduced during the night to reduce leakage, or during a drought, or on a selective basis where a customer has not paid his bill.

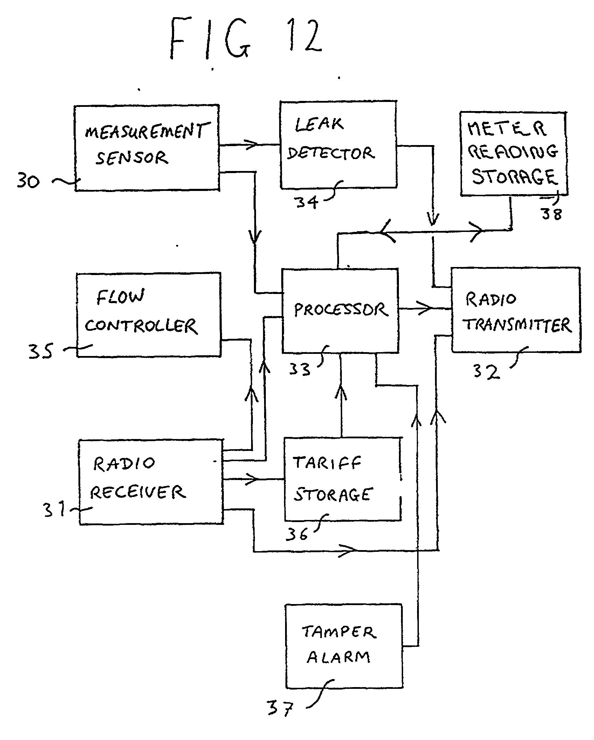

A further use of communication from the data gatherer out to customer's meters is to enable tariff schemes to be implemented in the meters. This would enable a customer to see the effect of tariff schemes on their individual bills, and would require considerably less data to be returned to the data gatherer. Tariffs can for example be hourly, daily, weekly or seasonal. There can be a low night rate tariff, and a high summer tariff. However, in theory, implementation of a tariff scheme would require all the domestic meters to be updated with any new tariffs simultaneously. In practice, several days could be allowed to update all meters. Figure 12 shows a tariff storage means 36 connected to the radio receiver, to allow automatic remote updating. The processor 33 could include a timing device to indicate when daily or seasonal tariff changes come into effect. The processor would calculate the single total charge over a particular period of time, which would be transmitted back to the data gatherer. This would involve transmitting less data than if raw consumption data for each of the different tariff periods were to be transmitted back to the data gatherer.

The timing device could be a real time clock (RTC), included within each meter for the purposes of timing of tariffs and possibly for synchronisation of communications between meters. All meters' RTCs will be synchronised to a single master clock in the data gatherer. The process of time synchronisation is as follows: the data gatherer would send a message containing the current time to each hub; the hub would set its RTC to the time received from the data gatherer; the hub would send a message containing the current time to the first meter (meter 1) in a chain; on receipt of this message meter 1 would set its RTC to the time received from the hub; meter 1 would send a message containing the current time to the next meter (meter 2) in the chain; on receipt of this message meter 2 would set its RTC to the time received from meter 1; this process would be repeated for all meters in all chains until the network of meters was synchronised. When one meter sends the current time to the next meter and the next meter sets its RTC, due allowance would be made for the duration of message transfer, so that no time was lost and the RTCs had the same time as the master RTC in the data gatherer.

Time synchronisation would be undertaken at regular intervals. Optionally, the process of time synchronisation could also be used to check the operation of the meters within the meter network and thus the integrity of the meter network. Any meter or meter network failures could thus either result in a neighbouring meter either (a) sending a message to the hub indicating the failure; or (b) adding a packet to the time synchronisation message so that once the time synchronisation message reached the end of its chain it could be returned to the hub complete with all failure information relating to the chain.

A tamper alarm, 37 is also shown, connected to the processor 33. This could give an immediate alarm signal back to the data gatherer, and optionally send back a meter reading before the person tampering has had an opportunity to alter the true reading.

In operating the complete system, preferably the network management computer stores a complete meter map indicating which meter is linked to which hub. It also stores routines for coping with hub failure. Whenever the meter map changes, or hub failure is detected, revised meter maps can be downloaded to hubs.

Each hub contains routing information and communication protocols. A polling communication method is preferred for controlling communication between the management computer and each hub. Although the outstations are envisaged as mere communication links, with the intelligence being distributed around the hubs, conceivably intelligent outstations could be provided.

When directed by the management computer, each hub sends messages out to distribute information or collect meter readings or other information. The message normally indicates a destination meter, routes and data where applicable. Each meter knows the directions of its neighbours, and determines the best neighbour to attempt communication with, depending on the routes contained in the message.

Eventually the message is returned to the hub containing all the required meter reading data.

It is envisaged that a message would contain a number of packets of information. These might include (a) "routing" information, containing information necessary for a message to reach the message's final destination(s); (b) message "type", identifying the purpose of the message; (c) destination meter(s), identifying the meter(s) the message is intended for; (d) "data", a field either containing information to be sent to the destination meters or a field which is populated by the destination meters with data to be returned to the hub.

It is envisaged that a message might serve more than one function and might thus contain several "type" fields, several sets of destination meters and several data fields. This would enable communications efficiency to be maximised and limit the drain on the meter's battery. For instance, a message may contain (a) a "broadcast" instruction with data to be sent to selected meters (such as new tariffs); (b) a "read meter" instruction to collect meter readings from selected meters; and (c) a "diagnostic read" instruction to collect any fault conditions as the message is sent through the network and any new meters not already configured.

It is envisaged that some messages would have a destination of a single meter, whilst other messages would have a number of destinations which in the limit included all meters on a given route. It is also envisaged that when a message reaches a destination meter, the message is modified to indicate that the destination meter has received the message. Once all destination meters have received the message or attempts to communicate with failed destination meters have been abandoned and noted in the message, it is envisaged that the message will be returned to the hub. This ensures that the hub and hence the data gatherer and its operators are informed of the actions which were successful and if there are any failures or faults which require remedial action.

There are a number of methods of achieving communications within a network of meters. For instance, a message sent from the hub may contain a complete list of meters that the message must be sent to in order for the message to reach its destination; in this case the message contains all the information needed to reach a given meter, and each meter has no knowledge of the rest of the meter network. A second method would be for the hub to send a message containing just the final meter destination of the message: in this case the message contains no network information and each meter in the network has complete knowledge of the network. A third method would be for the hub to send a message containing the destination and the route the message is to take to get to the destination: in this case the hub has a complete map of the meter network, the meter has a map of the meters within communicating range and the meter "chains" they are on (a chain being a number of meters in which messages are sent, starting at one end of the chain, from one meter to another until they reach the other end of the chain). In all three cases the hub will need a complete map of the network of meters it is servicing.

The third method is envisaged to be preferred. In this scenario, each meter might lie in one or more chains. In addition, each chain will have two directions. Thus the routing information to reach a destination meter might contain a series of chains and directions to take along those chains. A meter (meter 1) receiving a message with the routing information would compare the information to its own local map; meter 1's own local map would show at least one chain that was also contained within the message and, this being the case, meter 1 would send the message to another meter further along the chain. If meter 1 identified more than one chain in its own local map that was in the message, then meter 1 would pass the message to a meter on the chain that was closest to the destination meter (this might occur if meter 1 was located at a junction between several chains). Finally, meter 1 might be able to directly communicate with the destination meter, in which case meter 1 would send the message directly to the destination meter. A similar process would occur when a message was being returned to the hub: in this case the final destination meter would alter the message slightly to indicate that the message was to be passed in the reverse direction down the route (unless the route was circular and the final destination was the hub).

Depending on the requirements of the message, the method by which a message progresses down a chain is anticipated to vary. For example, a message that is required to reach all meters would be sent from a meter to its most adjacent neighbouring meter as it is sent down a chain. If, however, the information within a message is just for the meter at the end of a chain, there is no need for the message to be sent via all of the meters in the chain and hence it is envisaged that the messages might be sent via the minimum number of meters, with the maximum distance being achieved on each transmission of the message. A third example might be where each meter adds a meter reading to the message as it is passed along a chain: here it can be seen that the meters at the end of the chain will have a significantly longer message to transmit than those at the beginning: to alleviate excessive drain on the meters' batteries it is envisaged that this meter reading collection message might be sent to, say, every third meter in the chain: in such cases three such messages would be sent with the possible option of messages interleaving to optimise traffic in the network.

Preferably meters would configure themselves on installation. Thus when a meter (meter 1) is installed, it might broadcast a message to establish which meters (meters 2) were within communicating range. Any meter 2 receiving the broadcast message would respond with a reply containing the meter 2 identification number. To avoid meter 2 replies being unintelligible due to several replies being sent at the same time, meter 2 might wait a "random" amount of time before replying. Meter 1 can establish a list of all the meters within its range of communications by a combination of (a) meter 1 telling a given meter 2 not to reply to future broadcasts when meter 1 has established communications with that meter 2, and (b) meter 1 repeating the broadcast message; and (c) meter 1 interrogating the meter 2s it establishes communication with to identify the meters with which these meter 2s can communicate with. For the purposes of the above, the hub would behave like any other meter 2. Alternative methods of meter 1 establishing the local meter list can also be envisaged.

Thus, on installation (a) meter 1 establishes a list of the identity of all the neighbouring meter 2s within communications range, and (b) neighbouring meter 2s add the same information for the meter 1 to their local meter lists.

Preferably the meter communications network would be self-configuring. For example, as described above, the network management system would provide the hub with a list of meters that it is to service (the meters within the hub's cell). It is envisaged that the hub would build up the network by sending a message to its nearest meters (meter 1s) to read the list of meters (meter 2s) that each of the meter 1s was able to communicate with. The hub would then send a message to the meter 2s via the meter 1s to establish which meters these meter 2s could communicate with. This process would be repeated, for all subsequent meters, with the hub building up a map of how to get to each meter in the cell. In the process of doing this, the hub would thus identify the chains connecting meters, and would send messages to the meters to configure them with the chains they lie on.

In this way the network is built up by the hub. Changes in the network (for example, communications failures due to meter failures, or changes in signal path conditions affecting the number of meter 2s, the meter 1s can communicate with, or additional unconfigured meters added to the network) would be reported back to the hub via the diagnostic message described above and the hub would then repeat the above process as necessary to adapt the network to the revised meter structure.

The measurement sensor of the meter may well be located underground, but the radio receiver and radio transmitter aerials may be either underground or above ground. They may be more visually obtrusive, and more susceptible to damage if above ground, but the range of communication is increased.

There has been described in the foregoing a meter for remote reading of a utility such as gas, liquid or electricity, supplied, produced or used at a given location, comprising:
a measurement means for the utility,
a radio receiver, and
a radio transmitter for transmitting measurement information generated by the measurement means, and arranged to operate with the radio receiver to pass on information received by the receiver.

Preferably the meter further comprises a storage means and a controller, and is arranged to pass on information received by the receiver by a store and forward operation.

In a preferred embodiment the meter further comprises monitoring means communicating with the radio transmitter for monitoring and reporting a quality of the utility supplied, produced or used, such as water or gas pressure, or electrical supply voltage.

Preferably the meter further comprises leak detection means communicating with the radio transmitter for detecting and reporting fluid leaks or electrical short circuits, particularly those downstream of the meter.

Advantageously, the meter further comprises flow control means communicating with the radio receiver, to restrict the flow of fluid or current according to radio signals received by the radio receiver.

Advantageously, the measurement means further comprises means for storing a tariff of charges and processing means for generating measurement information based on the tariff and the measured amounts of the utility used or supplied, wherein the tariff storage means is connected to the radio receiver to enable remote updating of the tariff.

Preferably the radio transmitter and receiver of the meter are arranged to use the 184 MHz band.

Advantageously the meter is a domestic water supply meter. As there are currently few water meters installed, the need for upgrade compatibility and redundancy is minimised.

Preferably the meter forms part of a communication system comprising a plurality of the meters arranged in chains around a hub.

Advantageously the system further comprises at least one outstation, between the hub and the data gatherer.

Advantageously the system further comprises a telephone data link between a chain of meters and the hub.

There has also been described a meter for remote reading of a utility such as gas, liquid or electricity, supplied, produced or used at a given location, comprising:
a measurement means for the utility supplied, produced or used;
a radio receiver;
a radio transmitter; and
a controller arranged to control the transmitter for transmitting measurement information generated by the measurement means, and/or information received by the receiver.

Preferably the controller comprises a storage means and is arranged to pass on information by a store and forward operation.

The present invention has the advantages of minimising the capital cost by reducing the number of secondary repeaters required, and by making use of short range low power radios in each meter. The "hopping" concept gives great flexibility in allowable maximum data rates, which can be particularly useful for updating the tariffs in all meters in a short period of time. Reliability of communication can be enhanced by providing multiple paths. Individual meters can be read "out of turn" where required for occupancy changes for example, without any extra cost. Various different ways of connecting chains of meters to hubs can be provided to suite local requirements. Mobile hubs provided in vans could even be envisaged, particularly for rural areas. Where necessary, techniques for giving longer transmission range can be adopted such as the spread spectrum technique.

## Claims

1. A meter for liquid or gas metering for use in a communication system, said communication system comprising a chain of such meters and being for remote reading of a gas or liquid utility supplied, produced or used at a given location, said meter comprising:
a measurement means (30), for the utility supplied, produced or used;
a radio receiver (31);
a radio transmitter (32), for transmitting measurement information generated by the measurement means, and arranged to operate with the radio receiver to pass on information received by the receiver;
**characterized by**:
pressure control means for allowing the gas or liquid to be supplied at a reduced pressure, according to commands received by the receiver.

2. A meter according to Claim 1, arranged to receive and store measurement information from a neighbouring meter and pass this information on when failure of the neighbouring meter is detected.

3. A meter according to Claim 1 or 2, comprising:
means (36), for storing and updating a tariff of charges; and
processing means (33), for calculating a total charge from a plurality of readings charged at different rates.

4. A meter according to any of Claims 1 to 3, for remote reading of gas or liquid utilities in domestic premises, comprising:
means for monitoring the gas or liquid pressure;
means for storing a reference pressure level; and
means for indicating when the monitored pressure is over or under the reference level.

5. A communication system comprising a chain of meters according to claim 1, each meter being adapted to communicate with others in the chain to pass information along the chain.

6. A communication system according to Claim 5, comprising:
a hub (5), connecting a plurality of said chains of meters in a star formation or a loop formation.

7. A communication system according to Claim 6, comprising:
a data gatherer (2), connecting a plurality of said hubs in a star formation or a loop formation.

8. A communication system according to any of Claims 5 to 7, wherein two or more communication paths are defined along one chain or part of a chain, each path being created by bypassing the meters used by the other path or paths.

9. A communication system as defined in Claim 8, wherein said multiple communication paths are provided in the vicinity of junctions between chains, or in the vicinity of a hub.

10. A communication system as defined in Claim 8 or Claim 9, wherein each meter determines part of the route of the communication path, by bypassing neighbouring meters.

11. A communication system as defined in any of Claims 8 to 10, wherein the hub determines part of the route of the communication path.

12. A communication system according to any one of Claims 5 to 11, comprising:
a plurality of said hubs, each connected to a plurality of said meters, wherein upon failure of a hub (cell G), neighbouring hubs are reconfigurable to communicate with meters normally adapted to communicate with the failed hub.

13. A communication system according to Claim 12, wherein each hub contains a map of meters normally adapted to communicate with it, and a map of meters normally adapted to communicate with neighbouring hubs.

14. A communication system according to Claim 12 or Claim 13, wherein the hubs are adapted to communicate with a network management system (7), for instructing the neighbouring hubs to reconfigure, in response to an indication that the failed hub has failed.

15. A utility supply system comprising a plurality of meters for use in a communication system, said communication system comprising a chain of such meters and being for remote reading of a utility supplied, produced or used at a given location, said meters comprising:
a measurement means (30), for the utility supplied, produced or used;
means for monitoring a parameter of quality of the utility supplied;
a radio receiver (31); and
a radio transmitter (32), for transmitting measurement information generated by the measurement means, and arranged to operate with the radio receiver to pass on information received by the receiver;
said meters being for use in domestic premises and the supply system being **characterized by**:
means for controlling the supply of the utility from a central source to the domestic premises in response to quality information transmitted by the meters.

16. A utility supply system according to claim 15, wherein the utility is a gas, a liquid or electricity.

## Patentansprüche

1. Messgerät für eine Flüssigkeits- oder Gasmessung für die Anwendung in einem Kommunikationssystem, wobei das Kommunikationssystem eine Kette derartiger Messgeräte enthält und ausgebildet ist für ein Fernlesen einer bei einer vorgegebenen Stelle zugeführten, erzeugten oder verwendeten Gas- oder Flüssigkeitsgebrauchsgröße, wobei das Messgerät enthält:
eine Messvorrichtung (30) für die zugeführte, erzeugte oder verwendete Gebrauchsgröße;
einen Funkempfänger (31);
einen Funksender (32) zum Übertragen von Messinformation, erzeugt durch die Messvorrichtung, und ausgebildet für den Betrieb mit dem Funkempfänger zum Weiterführen von durch den Empfänger empfangener Information;
**gekennzeichnet durch**:
eine Drucksteuervorrichtung, die das Zuführen des Gases oder der Flüssigkeit bei einem reduzierten Druck ermöglicht, gemäß Befehlen, die **durch** den Empfänger empfangen werden.

2. Messgerät nach Anspruch 1, ausgebildet zum Empfangen und speichern von Messinformation von einem benachbarten Messgerät und zum Weiterführen dieser Information, wenn ein Fehler des benachbarten Messgeräts detektiert wird.

3. Messgerät nach Anspruch 1 oder 2, enthaltend:
eine Vorrichtung (36) zum Speichern und Aktualisieren von Tarifgebühren; und
eine Verarbeitungsvorrichtung (33) zum Berechnen einer Gesamtgebühr anhand einer Vielzahl von Lesevorgängen, abgerechnet bei unterschiedlichen Raten.

4. Messgerät nach einem der Ansprüche 1 bis 3, ausgebildet für ein Fernlesen von Gas- und Flüssigkeitsgebrauchsgrößen in Haushaltanwesen, enthaltend:
eine Vorrichtung zum Überwachen des Gas- oder Flüssigkeitsdrucks;
eine Vorrichtung zum Speichern eines Referenzdruckniveaus; und
eine Vorrichtung zum Anzeigen, wenn der überwachte Druck über oder unter halb des Referenzniveaus liegt.

5. Kommunikationssystem mit einer Kette von Messgeräten nach Anspruch 1, wobei jedes Messgerät ausgebildet ist zum Kommunizieren mit Anderen in der Kette zum Weiterführen von Information entlang der Kette.

6. Kommunikationssystem nach Anspruch 5, enthaltend:
einen Zentralknoten (5) zum Verbinden mehrerer Ketten der Messgeräte in Sternformation oder in Schleifenformation.

7. Kommunikationssystem nach Anspruch 6, enthaltend:
eine Datensammeleinheit (2) zum Verbinden mehrerer der Zentralknoten in einer Sternformation oder einer Schleifenformation.

8. Kommunikationssystem nach einem der Ansprüche 5 bis 7, wobei zwei oder mehrere der Kommunikationspfade entlang einer Kette oder einem Teil einer Kette definiert sind, und jeder Pfad erzeugt wird, indem die Messgeräte umgangen werden, die von dem anderen Pfad oder den anderen Pfaden verwendet werden.

9. Kommunikationssystem nach Anspruch 8, wobei mehrere Kommunikationspfade in der Nähe von Verbindungspunkten zwischen Ketten oder in der Nähe eines Zentralknotens vorgesehen sind.

10. Kommunikationssystem nach Anspruch 8 oder Anspruch 9, wobei jedes Messgerät einen Teil der Route des Kommunikationspfads unter Umgehung benachbarter Messgeräte bestimmt.

11. Kommunikationssystem nach einem der Ansprüche 8 bis 10, wobei der Zentralknoten einen Teil der Route des Kommunikationspfads bestimmt.

12. Kommunikationssystem nach einem der Ansprüche 5 bis 11, enthaltend:
mehrere der Zentralknoten, jeweils verbunden mit mehreren der Messgeräte, wobei bei einem Fehler eines Zentralknotens (Zelle G) benachbarte Zentralknoten zum Kommunizieren mit Messgeräten rekonfiguriert sind, die normalerweise für die Kommunikation für den fehlerhaften Zentralknoten ausgebildet sind.

13. Kommunikationssystem nach Anspruch 12, wobei jeder Zentralknoten eine Abbildung der Messgeräte enthält, die normalerweise für eine Kommunikation mit diesem ausgebildet sind, sowie eine Abbildung der Messgeräte, die normalerweise für eine Kommunikation mit benachbarten Zentralknoten ausgebildet sind.

14. Kommunikationssystem nach Anspruch 12 oder Anspruch 13, wobei die Zentralknoten ausgebildet sind für die Kommunikation mit einem Netzwerkmanagementsystem (7) zum Anweisen der benachbarten Zentralknoten für eine Rekonfiguration, in Ansprechen auf eine Anzeige, dass bei dem fehlerhaften Zentralknoten ein Fehler aufgetreten ist.

15. Gebrauchsgrößen-Zuführsystem mit einer Vielzahl von Messgeräten für die Anwendung in einem Kommunikationssystem, wobei das Kommunikationssystem eine Kette derartiger Messgeräte enthält und ausgebildet ist für einen Fernlesevorgang einer bei einer vorgegebenen Stelle zugeführten, erzeugten oder verwendeten Gebrauchsgröße, und wobei die Messgeräte enthalten:
eine Messvorrichtung (30), für die zugeführte, erzeugte oder verwendete Gebrauchsgröße;
eine Vorrichtung zum Überwachen eines Qualitätsparameters der zugeführten Gebrauchsgröße;
einen Funkempfänger (31); und
einen Funksender (32) zum Übertragen von durch die Messvorrichtung erzeugter Messinformation und ausgebildet für den Betrieb mit dem Funkempfänger zum Weiterführen von durch den Empfänger empfangener Information; wobei
die Messgeräte ausgebildet sind für die Anwendung in Haushaltsanwesen und das Zuführsystem **gekennzeichnet ist durch**:
eine Vorrichtung zum Steuern der Zuführung der Gebrauchsgröße von einer Zentralquelle zu den Haushaltsanwesen in Ansprechen auf Qualitätsinformation, die **durch** die Messgeräte übertragen werden.

16. Gebrauchsgrößen-Zuführsystem nach Anspruch 15, wobei die Gebrauchsgröße ein Gas, eine Flüssigkeit oder Elektrizität ist.

## Revendications

1. Compteur pour le comptage de liquides ou de gaz destiné à être utilisé dans un système de communication, ledit système de communication comprenant une chaîne de tels compteurs et étant destiné au relevé à distance d'une utilité, sous forme de gaz ou de liquide, fournie, produite ou utilisée en un emplacement donné, ledit compteur comprenant :
un moyen de mesure (30), pour l'utilité fournie, produite ou utilisée;
un récepteur radio (31);
un émetteur radio (32), pour transmettre des informations de mesure générées par le moyen de mesure, et agencé de façon à fonctionner avec le récepteur radio pour faire passer les informations reçues par le récepteur;
**caractérisé par** :
un moyen de commande de pression pour permettre au gaz ou au liquide d'être fourni à une pression réduite, selon des instructions reçues par le récepteur.

2. Compteur selon la revendication 1, agencé de façon à recevoir et mémoriser les informations de mesure provenant d'un compteur voisin et faire passer ces informations lorsqu'une panne du compteur voisin est détectée.

3. Compteur selon la revendication 1 ou 2, comprenant :
un moyen (36) pour mémoriser et mettre à jour un tarif de charges; et
un moyen de traitement (33), pour calculer une charge totale à partir d'une pluralité de relevés auxquels sont appliqués des taux différents.

4. Compteur selon l'une quelconque des revendications 1 à 3, pour le relevé à distance d'utilités sous forme de gaz ou de liquide dans des locaux domestiques, comprenant :
un moyen pour contrôler la pression de gaz ou de liquide;
un moyen pour mesurer un niveau de pression de référence; et
un moyen pour indiquer quand la pression contrôlée est au-dessus ou au-dessous du niveau de référence.

5. Système de communication comprenant une chaîne de compteurs selon la revendication 1, chaque compteur étant adapté pour communiquer avec les autres dans la chaîne pour faire passer des informations le long de la chaîne.

6. Système de communication selon la revendication 5, comprenant :
un concentrateur (5), reliant une pluralité desdites chaînes de compteurs en une formation en étoile ou en une formation en boucle.

7. Système de communication selon la revendication 6, comprenant :
un collecteur de données (2), reliant une pluralité desdits concentrateurs en une formation en étoile ou en une formation en boucle.

8. Système de communication selon l'une quelconque des revendications 5 à 7, dans lequel deux chemins de communication ou plus sont définis le long d'une chaîne ou d'une partie de chaîne, chaque chemin étant créé en contournant les compteurs utilisés par l'autre ou les autres chemin(s).

9. Système de communication selon la revendication 8, dans lequel lesdits chemins de communication multiples sont prévus au voisinage de jonctions entre chaînes, ou au voisinage d'un concentrateur.

10. Système de communication selon la revendication 8 ou 9, dans lequel chaque compteur détermine une partie du trajet du chemin de communication, en contournant les compteurs voisins.

11. Système de communication selon l'une quelconque des revendications 8 à 10, dans lequel le concentrateur détermine une partie du trajet du chemin de communication.

12. Système de communication selon l'une quelconque des revendications 5 à 11, comprenant :
une pluralité desdits concentrateurs, chacun étant relié à une pluralité desdits compteurs, dans lequel lors de la panne d'un concentrateur (cellule G), les concentrateurs voisins peuvent être reconfigurés pour communiquer avec des compteurs normalement adaptés pour communiquer avec le concentrateur qui est en panne.

13. Système de communication selon la revendication 12, dans lequel chaque concentrateur contient une carte des compteurs normalement adaptés pour communiquer avec lui, et une carte des compteurs normalement adaptés pour communiquer avec les concentrateurs voisins.

14. Système de communication selon la revendication 12 ou 13, dans lequel les concentrateurs sont adaptés pour communiquer avec un système de gestion (7) de réseau, pour ordonner aux concentrateurs voisins de se reconfigurer, en réponse à un signal indiquant que le concentrateur en panne est tombé en panne.

15. Système d'alimentation en utilités comprenant une pluralité de compteurs destinés à être utilisés dans un système de communication, ledit système de communication comprenant une chaîne de tels compteurs et servant au relevé à distance d'une utilité fournie, produite produite ou utilisée en un emplacement donné, lesdits compteurs comprenant :
un moyen de mesure (30), pour l'utilité fournie, produite ou utilisée;
un moyen pour contrôler un paramètre de qualité de l'utilité fournie;
un récepteur radio (31); et
un émetteur radio (32), pour transmettre des informations de mesure générées par le moyen de mesure, et agencé de façon à fonctionner avec le récepteur radio pour faire passer les informations reçues par le récepteur;
lesdits compteurs étant destinés à être utilisés dans des locaux domestiques et le système d'alimentation étant **caractérisé par** :
un moyen pour commander l'alimentation de l'utilité, d'une source centrale aux locaux domestiques, en réponse à des informations de qualité transmises par les compteurs.

16. Système d'alimentation en utilités selon la revendication 15, dans lequel l'utilité est un gaz, un liquide ou de l'électricité.
